# DEMANDE DE BREVET EUROPEEN

(11) **EP 1 179 780 A1**
(43) Date de publication de la demande: **13.02.2002**
(21) Numéro de dépôt: 01430025.5
(22) Date de dépôt: 07.08.2001
(51) Int. Cl.: G06F 12/10

(54) **Extension d'espace d'adressage sécurisé pour microcontrôleur supportant l'implantation de machine virtuelle notamment pour carte à puce**

(30) Priorité: 10.08.2000 FR 0010550
(71) Demandeur: GEMPLUS, 13420 Gemenos Cedex (FR)
(72) Inventeur: Garnier, M. Thierry, 83500 La Seyne sur Mer (FR)

(57) **Abrégé**

L'espace d'adressage de la mémoire principale (MP) d'un microcontrôleur pour objet portable, tel que carte à puce, est étendu, sans modifier la taille de références d'objets pointés dans cet espace, à quatre espaces d'adressage (C_OS, D_OS, C_VM, D_VM) ayant chacun une capacité d'au plus 2^{N} adresses respectivement pour des instructions et données relatives au système d'exploitation (OS) et à la machine virtuelle (VM). Les espaces sont accessibles par des identificateurs à 2 bits (ASI) chacun accolé à une adresse à N bits (@VA) et délivré avec celle-ci par l'unité centrale (CPU) du microcontrôleur à travers des instructions de déplacement spécifiques ou génériques qualifiées. La mémoire (MP) a 2^{N+2} blocs et un moyen de traduction d'adresse (MMU, TLB) fait correspondre un identificateur d'espace et une adresse délivrés par l'unité centrale à une adresse physique à N+2 bits (@PA) de la mémoire.

## Description

La présente invention concerne de manière générale la conception de microcontrôleur devant supporter l'implantation de machine virtuelle pour de petits objets portables, tels que des cartes à puce (smart cards).

Des motifs économiques dans le domaine de la carte à puce visent à utiliser de petits microcontrôleurs avec une architecture 8 bits ou 16 bits dont la capacité d'adressage est réduite alors que l'espace adressable requis par les programmes ne cesse d'augmenter et dépasse maintenant les capacités d'adressage des unités centrales de traitement dans ces microcontrôleurs, typiquement 64 kiloadresses pour les unités centrales à 8/16 bits.

Pour supporter ce dépassement, il a été proposé d'augmenter sensiblement la taille de la mémoire du microcontrôleur englobant essentiellement la mémoire morte ROM et la mémoire non volatile EEPROM, par exemple à une capacité de 104 kiloadresses. L'unité centrale continue à ne gérer physiquement que les 64 kiloadresses, et 20 kiloadresses de ceux-ci avec les 2 x 20 kiloadresses supplémentaires sont gérés en trois bancs de mémoire, ou selon un autre exemple, 40 kiloadresses dans les 64 kiloadresses avec les 40 kiloadresses supplémentaires sont gérés en deux bancs de mémoire, qui sont accessibles l'un après l'autre - de manière exclusive - au moyen d'un registre de sélection de banc supplémentaire. Cette segmentation de la mémoire en bancs de mémoire est pénalisante sur le plan des performances. Les inconvénients de la segmentation sont :
- la nécessité de mettre à jour le registre de sélection de banc de mémoire pour accéder à l'un des bancs de mémoire ; les références logiques intégrant la valeur du registre de sélection de banc sont alors de taille supérieure au mot machine de l'unité centrale ;
- la taille des bancs de mémoire est généralement fixe et liée physiquement à l'unité centrale: cette granularité - généralement faible (gros blocs) - est un handicap pour la protection fine d'espace adressable différents ;
- les pertes de performance liées à la gestion des bancs de mémoire est reconnue : complexité des mécanismes logiciels liée au contrôle continuel (mise à jour, tests,...) du registre de sélection de banc.

Ces inconvénients s'accentuent avec l'arrivée dans les cartes à puce, de système d'exploitation s'appuyant sur une machine virtuelle dont la capacité d'adressage est limitée par la taille des références d'accès à la mémoire qu'elle manipule, soit une capacité d'adressage 2¹⁶ = 64 kiloadresses pour des références codées sur 16 bits adressant à la fois du code de la machine virtuelle, appelé pseudocode (byte code), et des données.

Dans le contexte des machines microprogrammées, les performances de celles-ci sont fortement liées à la bonne adéquation entre l'espace adressable requis par le code à exécuter et la taille naturelle du mot de l'unité centrale ; en effet, si le microcontrôleur doit manipuler des références, notions en langage orienté objet tel que JAVA encapsulant la notion de pointeurs d'instruction ou de données, dont la taille est supérieure à celle du bus d'adresse d'instruction ou de données, plusieurs opérations sont nécessaires pour accéder aux données visées.

L'invention vise à étendre l'espace d'adressage des données d'un microcontrôleur pour objet portable, tel que carte à puce, à une taille bien supérieure à celle selon la technique antérieure afin de supporter une machine virtuelle tout en évitant la complexité de gestion d'adressage engendrée par un registre de sélection de banc de mémoire.

A cette fin, un procédé pour étendre l'espace d'adressage des données dans un objet portable à microcontrôleur comprenant une unité centrale de traitement supportant un système d'exploitation s'appuyant sur une machine virtuelle, et un moyen de mémorisation adressable par des adresses ayant N bits, est caractérisé par une augmentation de l'espace d'adressage du moyen de mémorisation à quatre espaces alternatifs d'adressage ayant chacun une capacité d'au plus 2^{N} adresses respectivement pour des instructions et des données relatives au système d'exploitation et des instructions et des données relatives à la machine virtuelle, et par un accès aux quatre espaces respectivement par des identificateurs d'espace à 2 bits chacun accolé à une adresse et délivré avec celle-ci par l'unité centrale.

La distinction des espaces d'adressage des machines réelle et virtuelle est assurée par le matériel (hardware).

Ainsi, dans le microcontrôleur de l'objet portable, tel que carte à puce, où le système d'exploitation s'appuie sur l'utilisation d'une machine virtuelle, chacun des espaces adressables dédiés au système d'exploitation et à la machine virtuelle est doublé tout en conservant une taille de références (pointeurs) des objets pointés dans ces espaces, compatible avec la largeur du bus d'adressage physique de la mémoire principale du microcontrôleur. En outre, la séparation physique des espaces d'adressage entre système d'exploitation et machine virtuelle renforce la protection du système d'exploitation contre des attaques potentielles du code applicatif.

En pratique pour le programmeur, chaque opération d'accès à la mémoire indique, outre l'adresse à atteindre, l'espace parmi quatre dans le moyen de mémorisation où le code ou les données seront prélevés. Plus précisément, le procédé comprend un décodage d'une opération de déplacement dans un espace d'adressage responsable de la génération d'un identificateur dudit espace d'adressage par l'unité centrale. Cette opération peut se traduire par une instruction spécifique à un espace, ou bien par une instruction générique mais qualifiée par un moyen matériel quelconque pour adresser l'espace visé, par exemple une qualification en fonction des registres de transfert utilisés.

L'invention concerne également un objet portable à microcontrôleur pour la mise en oeuvre du procédé d'extension d'espace d'adressage. Dans cet objet portable, le moyen de mémorisation comprend une mémoire ayant 2^{N+2} blocs et un moyen de traduction d'adresse pour faire correspondre un identificateur d'espace à 2 bits et une adresse délivrée par l'unité centrale à une adresse physique à N+2 bits de la mémoire. En pratique, le moyen de traduction d'adresse fait correspondre l'identificateur d'espace délivré et seulement des bits de poids fort de l'adresse délivrée à des bits de poids fort de l'adresse physique, l'adresse délivrée et l'adresse physique ayant des bits de poids faible en commun.

Ce moyen de traduction d'adresse est lié par matériel au type d'accès mémoire effectué ; il est ainsi possible d'associer à une opération d'accès mémoire du contrôleur (Fetch d'une instruction, ou instruction de chargement de données), le fait que cette opération porte sur un espace prédéterminé : une partie du jeu d'instruction d'un microcontrôleur liée au chargement de données peut être dupliquée afin d'affecter un espace de travail à chacune des versions des instructions clonées. plus économiquement il peut être envisagé de non plus dupliquer mais de qualifier chacune des instructions de chargement de données du microcontrôleur afin que selon le qualificatif attribué, une telle instruction vienne charger ou prendre sa donnée de l'espace adéquat ; cette qualification d'instruction peut par exemple se faire à travers le nom des registres impliqués dans la transaction.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'un microcontrôleur dans un objet portable à microcontrôleur ;
- la figure 2 est une table d'espace alternatif d'adressage selon l'invention ;
- la figure 3 est un diagramme de l'accolement de bits supplémentaires d'identificateur d'espace à une adresse délivrée ; et
- la figure 4 est un bloc-diagramme schématique d'une mémoire tampon de traduction d'adresse et d'une unité de gestion de mémoire dans le microcontrôleur.

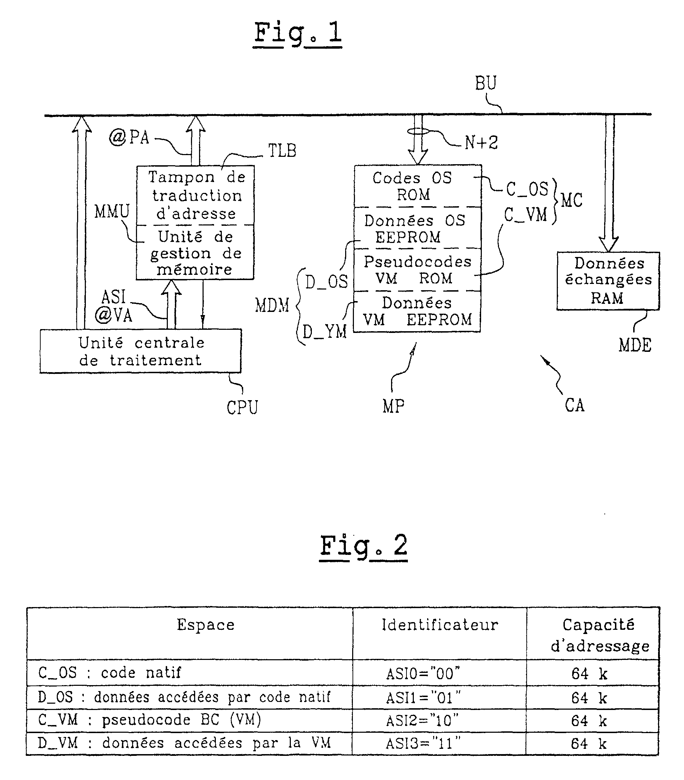

Selon une réalisation préférée montrée à la figure 1, un objet électronique portable tel qu'une carte à puce CA, dite également carte à microcontrôleur, comprend une unité de traitement centrale CPU constituée par un microprocesseur, jouant le rôle de machine hôte, une mémoire de codes MC de type ROM, une mémoire non volatile de données de machine MDM de type EEPROM et une mémoire à accès aléatoire de données échangées MDE de type RAM. La mémoire MC contient des instructions, c'est-à-dire des codes natifs d'un système d'exploitation OS (Operating System) et des instructions, c'est-à-dire des pseudocodes BC (byte codes) d'une machine virtuelle VM sur laquelle s'appuie le système d'exploitation. La mémoire MDM contient essentiellement des données liées au système d'exploitation et accessibles par codes natifs et des données liées à la machine virtuelle et accessibles par pseudocodes. Il est rappelé que les pseudocodes résultent de la compilation d'un programme en langage source, par exemple en JAVA, et sont interprétés par la machine virtuelle implémentée sur l'unité de traitement. La mémoire MDE contient essentiellement des données échangées avec le monde extérieur à la carte à puce CA, notamment avec un terminal d'accueil de la carte ; des données sont reçues par la carte pour être traitées par l'unité centrale CPU et des données sont transmises sous la commande de l'unité centrale.

Dans la suite, les termes "mémoire principale" MP de l'unité centrale désigne les mémoires mortes MC et MDM.

Selon cette réalisation, l'unité centrale CPU est reliée à la mémoire notamment par un bus d'adresse à N = 16 bits correspondant à la taille des références propres au langage que la machine virtuelle manipule. Ces références sont analogues à des pointeurs permettant d'accéder à des objets dans la mémoire principale. Cette taille limite actuellement la capacité d'adressage de la machine virtuelle à 2^{N} adresses = 64 kiloadresses pour adresser des données et des pseudocodes de la machine virtuelle.

Selon l'invention, l'espace d'adressage du microcontrôleur est augmenté physiquement à 4 x 2^{N} adresses = 4 x 64 kiloadresses, soit 2^{N+2} adresses = 256 kiloadresses afin de disposer d'une mémoire principale MP partagée en quatre espaces alternatifs d'adressage C_OS, D_OS, C_VM et D_VM de chacun 64 kiloadresses. Le système d'exploitation OS intégrant la machine virtuelle VM est alors capable d'accéder directement à ces espaces. Les quatre espaces C_OS, D_OS, C_VM et D_VM de la mémoire MP sont définis dans la table montrée à la figure 2 et sont désignés respectivement par des identificateurs d'espace alternatif ASI0 à ASI3 (Alternate Space Identifiers). Les deux premiers espaces C_OS et D_OS désignés par les identificateurs ASI0 et ASI1 sont dédiés au système d'exploitation (OS), c'est-à-dire respectivement aux instructions (Fetch) et aux données accessibles par le code natif du système d'exploitation et ne sont pas accessibles par définition à l'utilisateur, c'est-à-dire aux applications qui disposent de deux autres espaces. Ces derniers sont les troisième et quatrième espaces C_VM et D_VM désignés par les identificateurs ASI2 et ASI3 et sont dédiés à la machine virtuelle VM, c'est-à-dire respectivement aux instructions en pseudocode BC et aux données accessibles par la machine virtuelle.

La capacité d'adressage étant encore de 2^{N} adresses = 64 kiloadresses dans chaque espace correspondant à des références à N = 16 bits, le fonctionnement actuel de l'unité de traitement est conservée dans le microcontrôleur de la carte à puce CA.

Comme on le verra ci-après, l'unité de traitement CPU délivre deux bits supplémentaires d'identificateur d'espace ASI à la mémoire MP, en parallèle avec l'adresse à 16 bits. Un bus système BU relie l'unité centrale de traitement CPU notamment à la mémoire principale MP et à la mémoire RAM MDE et contient notamment un bus d'adresse à N + 2 = 16 + 2 = 18 bits pour adresser la mémoire principale MP à travers une unité de gestion de mémoire MMU (Memory Management Unit) et une mémoire tampon de traduction d'adresse TLB (Translation Lookaside Buffer), et un autre bus d'adresse à 16 bits pour adresser la mémoire RAM MDE.

La détermination d'un espace d'adressage pour chaque type d'accès permet avantageusement :
- d'utiliser la capacité maximale d'adressage de la machine hôte CPU pour bus à 16 bits pour chaque espace à 64 kiloadresses et donc de multiplier la capacité d'adressage totale de la machine hôte, soit 2 x 64 kiloadresses pour les espaces C_OS et D_OS ;
- de doubler la capacité maximale d'adressage de la machine virtuelle pour références à 16 bits en lui affectant un modèle mémoire type harvard avec séparation du pseudocode BC et des données, soit 2 x 64 kiloadresses pour les espaces C_VM et D_VM ;
- de conserver des références (pointeurs) de la machine virtuelle VM compatibles avec la taille du mot de base à 16 bits @VA de la machine hôte CPU ce qui constitue un gage de compacité du code et améliore l'association du système d'exploitation OS, du microcontrôleur de carte à puce et de l'application puisque ce n'est plus une adresse ou une partie de l'adresse qui sélectionne l'espace, mais le type d'accès grâce aux deux bits supplémentaires d'identification ASI.

Un autre avantage conféré par l'extension de l'espace d'adressage selon l'invention concerne le renforcement de la protection du système d'exploitation OS vis-à-vis des attaques potentielles du code applicatif de la machine virtuelle. En différenciant les espaces en fonction des types d'accès, le système d'exploitation OS garantit que l'application n'est en mesure que d'adresser des objets situés dans les espaces C_VM et D_VM, les espaces de système C_OS et D_OS n'étant pas accessibles aux applications.

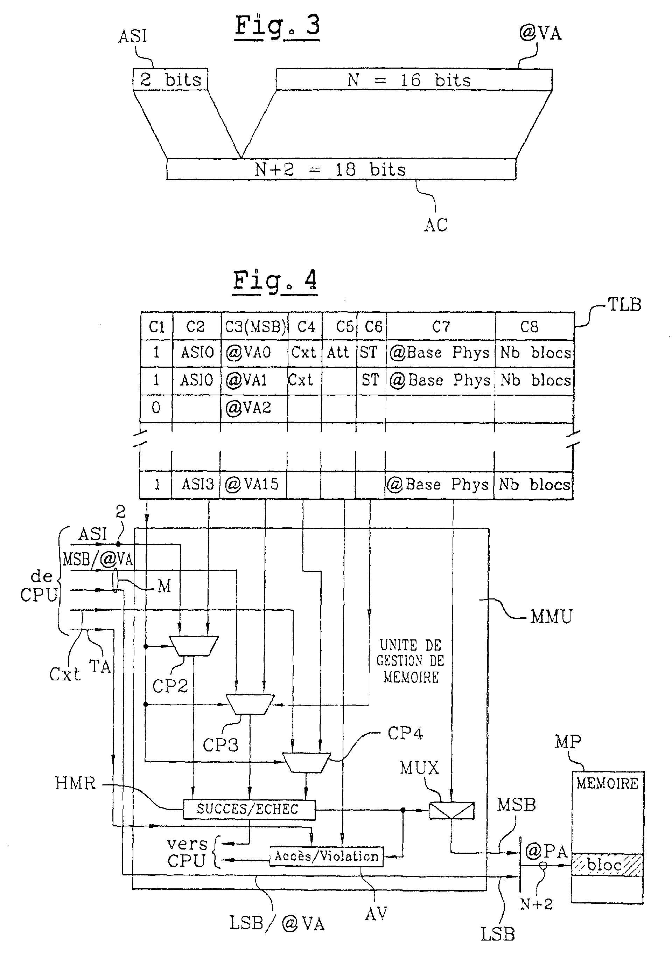

Physiquement, le quadruplement de l'espace d'adressage des données impose l'accolement de 2 bits supplémentaires composant l'identificateur d'espace ASI à chaque adresse (pointeur) de base à 16 bits @VA de l'unité centrale CPU afin de former une adresse composite AC à N + 2 = 18 bits parmi 2^{N+2} adresses = 4 x 64 kiloadresses, comme montré à la figure 3.

Les 2 bits supplémentaires ASI ne sont pas manipulés par logiciel en venant positionner ces 2 bits dans un registre de sélection additionnel pour bancs de mémoire selon la technique antérieure, mais sont générés automatiquement par le matériel, l'unité centrale CPU, en fonction par exemple de l'instruction utilisée.

Le programmeur choisit donc l'instruction appropriée pour adresser l'espace mémoire requis parmi les quatre espaces alternatifs d'adressage. Dans des langages de haut niveau, tel que le langage C, les variables sont alors définies dans les espaces adéquats, le compilateur se chargeant du droit d'assigner les bonnes instructions relativement aux variables utilisées.

Les interrogations (fetchs) de l'espace de code opération (instruction code) natif sont déjà naturellement identifiées par l'unité centrale CPU comme une opération particulière. L'unité centrale CPU associe donc facilement l'identificateur ASI0 de l'espace adéquat C_OS comprenant les 2 bits supplémentaires "00". Les accès aux données de code natif dans l'espace D_OS, aux pseudocodes BC dans l'espace C_VM et aux données pour machine virtuelle dans l'espace D_VM sont désignés en correspondance avec des instructions particulières dérivées d'une opération de base de l'unité centrale, par exemple l'instruction déplacement MOVC pour un code ou MOV pour des données pour le microprocesseur 80C51 d'INTEL (marque déposée), soit une instruction particulière pour chacun des espaces identifiés. Une méthode voisine est de qualifier une opération unique, par exemple MOVC, en fonction de l'espace où l'opération doit se réaliser ; cette qualification d'instruction est par exemple réalisée en fonction des registres mis à contribution dans l'opération.

La deuxième colonne du tableau de la figure 2 indique les bits supplémentaires "00", "01", "10" et "11" correspondant aux identificateurs d'espace ASI0 à ASI3.

Par exemple, des instructions génériques qualifiées, ou des instructions spécifiques assimilées pour le microprocesseur 80C51 précité permettraient de réaliser les opérations suivantes :
- lire des données du système d'exploitation d'une case (bloc) B1 de l'espace C_OS de la mémoire MP et les écrire dans une case B2 de la mémoire RAM MDE : MOV (B1) MDE & MOV (B2) C_OS ;
- lire une instruction de la machine virtuelle dans une case B3 et écrire son résultat dans une case B4 : MOV(B3&B4)C_VM ;
- lire des données pour machine virtuelle d'une case B5 dans la mémoire RAM MDE et les écrire dans un case B6 de l'espace D_VM : MOV(B5)_VM & MOV(B6)D_VM ;
où MOV désigne l'opération déplacer.

Lorsqu'une telle instruction est compilée et décodée par l'unité centrale CPU, les bits supplémentaires de l'identificateur ASI sont renseignés par celle-ci et transmis à l'unité de gestion de mémoire MMU afin que l'espace alternatif d'adressage correspondant à l'identificateur soit visé.

Selon un deuxième exemple en langage C, un tableau désigné par une variable Tab contenant des constantes non signées en code hexadécimal 0x11, 0x13, 0x1b, etc., et introduit à l'adresse 0x5E00 dans l'espace C_VM désigné par l'identificateur ASI2 est déclaré de la manière suivante :

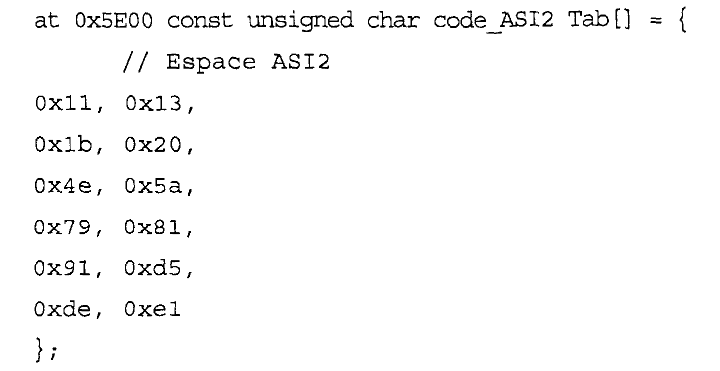

Puis par exemple une variable entière I est mise égale au contenu de la première case Tab[0] du tableau désignée par 0x11, et une variable SystemVar non signée est définie à la même adresse 0x5E00 de l'espace D_OS désigné par l'identificateur ASI1 et déclarée comme suit pour être incrémentée d'une unité:

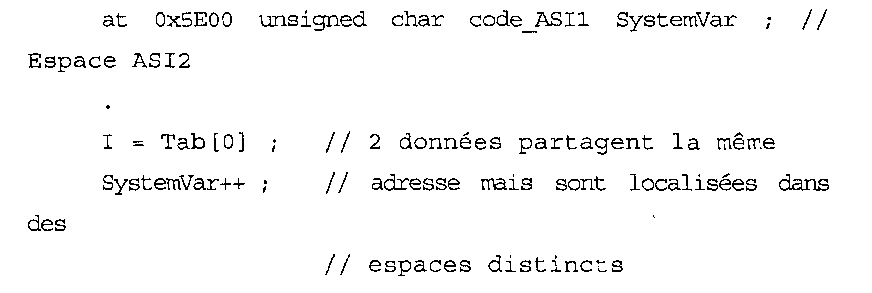

Pour assurer à la fois un maximum de sécurité et de performances, la distinction des quatre espaces d'adressage à travers le type d'accès est mis en oeuvre puis exploitée au niveau matériel de la carte à puce.

Une fois générée par l'unité centrale CPU, les informations constituées par les deux bits supplémentaires des identificateurs ASI sont utilisées par l'unité de gestion de mémoire, afin que soit adressé physiquement le bon espace de mémoire. L'unité de gestion de mémoire MMU est l'organe approprié, mais non unique, pour exploiter ces identificateurs ASI et permettre donc d'accéder de manière sécurisée et performante aux espaces d'adressage alternatifs selon l'invention.

Selon une réalisation préférée, l'invention est implémentée afin que les nouvelles instructions - ou assimilées - comprenant les identificateurs d'espace ASI soient générés et exploités par la mémoire tampon de traduction d'adresse TLB (Translation Lookaside Buffer) intégrée à l'unité de gestion MMU de la mémoire centrale qui traduit des adresses virtuelles @VA à 16 bits en des adresses physiques @PA de la mémoire principale MP comme montrée schématiquement à la figure 4.

La mémoire tampon TLB est par exemple une mémoire volatile de type CAM (Content Adressable Memory) gérée par l'unité de gestion MMU. La mémoire tampon TLB fait correspondre des adresses logiques virtuelles @VA délivrées par l'unité centrale CPU respectivement à des adresses physiques @PA pour la mémoire principale MP, afin qu'une instruction ou une donnée soit lue à la case désignée par l'adresse physique dans la mémoire principale MP en réponse à une adresse virtuelle de l'unité CPU.

Chaque adresse virtuelle @VA est composée de 16 bits dont des bits de poids fort MSB (Most Significant Bits), par exemple au plus les 6 bits de poids fort, sont traduits dans la mémoire TLB en des bits de poids fort d'une adresse physique @PA désignant un ensemble (page) de blocs. Dans cet ensemble, un bloc est désigné par les bits restants de poids faible LSB (Least Significant Bits) de l'adresse virtuelle @VA qui sont reportés dans l'adresse physique @PA en tant que bits de poids faible.

Comme montrée à la figure 4, la mémoire tampon TLB est organisée en une table de huit colonnes C1 à C8. Chaque ligne de la table fait correspondre un identificateur d'espace ASI et une adresse virtuelle @VA accolés à une adresse physique @PA et contient dans les colonnes :
- C1 : un bit de validation d'entrée de mémoire dont l'état "1" signifie qu'une adresse physique contenue partiellement dans les colonnes C7 et C8 désigne une case dans la mémoire MP contenant une instruction ou une donnée exploitable, et l'état "0" signifie qu'aucune adresse physique correspond à une case de mémoire exploitable ;
- C2 : deux bits d'identificateur d'espace d'adressage ASI selon l'invention désignant un espace d'adressage parmi quatre dans la mémoire MP ;
- C3 : les bits de poids fort MSB, en nombre égal au plus à 4 par exemple, de l'adresse virtuelle @VA associée aux 2 bits précédents ASI ;
- C4 : un mot de contexte Cxt fourni optionnellement par l'unité CPU, avec l'adresse @VA et les bits ASI, pour accéder à une case de la mémoire MP seulement en dépendance du contexte d'un processus ou d'une application prédéterminée ;
- C5 : un mot d'attribut Att à deux bits pour valider un accès (Lecture/Ecriture/Exécution) à la case correspondante de la mémoire MP, par exemple pour gérer une interruption d'un programme en cours d'exécution afin de le dérouter vers un rejet de la carte CA par exemple et ainsi interdire la génération d'une adresse physique ;
- C6 : un mot de masquage ST (Short Translation) pour limiter le nombre de bits de poids MSB de l'adresse virtuelle @VA à considérer dans le processus de comparaison ;
- C7 : les bits de poids MSB de l'adresse physique désignant la traduction dans l'espace physique de l'adresse du premier bloc spécifié par son adresse virtuelle @VAx avec x variant de 0 à 15 par exemple dans la colonne C3, lesquels bits MSB sont lus dans la mémoire TLB et transmis avec les bits de poids faible LSB de l'adresse virtuelle délivrée correspondante @VA à la mémoire principale MP à travers le bus BU ;
- C8 : la taille de l'ensemble (page) ayant pour adresse d'origine @ Base Phys et exprimée en nombre (Nb) de blocs.

Comme montrée à la figure 4, l'adresse composite délivrée par l'unité centrale CPU à l'unité de gestion MMU est composée au moins de deux champs contenant une adresse virtuelle logique manipulée @VA à 16 bits et un identificateur ASI à 2 bits spécifiant l'espace alternatif d'adressage auquel se réfère cette adresse, et le cas échéant un mot de contexte Cxt, et un type d'accès courant (type d'opération en cours) TA.

Une batterie de comparateurs/mémoires associatives CP2, CP3 et CP4 compare en parallèle les champs C2, C3 et C4 de chacune des entrées valides de la mémoire TLB correspondant au champ C1, avec un bit de validation "1", avec l'adresse à traduire comportant l'adresse virtuelle, l'identificateur ASI et le contexte courant Cxt.

Les résultats de ces comparaisons sont réunis dans une logique de succès/échec (Hit/Miss) HMR. En cas de succès des comparaisons, la logique HMR commande le test du type d'accès demandé TA dans un registre d'accès/violation AV par rapport au type d'accès autorisé (Champ Att : C5 est testé) et le résultat du test est transmis à l'unité centrale CPU. La logique HMR également commande à travers un multiplexeur MUX la lecture des bits de poids fort MSB de l'adresse @Base Phys dans la colonne C7 correspondant à la ligne trouvée de la table. Les bits lus MSB et LSB constituent l'adresse physique @PA à N Bits (N >= 18bite) appliquée à la mémoire MP désignant un bloc d'instructions ou de données accessible dans un ensemble de blocs de l'espace d'adressage désigné par l'identificateur délivré ASI.

## Revendications

1. Procédé pour étendre l'espace d'adressage dans un objet portable à microcontrôleur (CA) comprenant une unité centrale de traitement (CPU) supportant un système d'exploitation (OS) s'appuyant sur une machine virtuelle (VM), et un moyen de mémorisation adressable par des adresses ayant N bits, **caractérisé par** une augmentation de l'espace d'adressage du moyen de mémorisation (MMU, TLB, MP) à au plus (2^{M} - 1) espaces alternatifs d'adressage (C_OS, D_OS, C_VM, D_VM) ayant chacun une capacité d'au plus 2^{N} adresses respectivement pour des instructions et des données relatives au système d'exploitation (OS) et des instructions et des données relatives à la machine virtuelle (VM), et par un accès aux 2^{M} espaces respectivement par des identificateurs d'espace à M bits (ASI0 à ASI3), élaborés par l'unité centrale et chacun accolé à une adresse (@VA) et délivré avec celle-ci par ladite unité centrale (CPU).

2. Procédé conforme à la revendication 1, **caractérisé par** un décodage d'une opération de déplacement dans un espace d'adressage (C_OS, D_OS, C_VM, D_VM) responsable de la génération d'un identificateur (ASI0 à ASI3) dudit espace d'adressage par l'unité centrale (CPU).

3. Objet portable à microcontrôleur pour la mise en oeuvre du procédé conforme à la revendication 1 ou 2, comprenant l'unité centrale de traitement et le moyen de mémorisation, adressable par des adresses ayant N bits, **caractérisé en ce que** le moyen de mémorisation comprend une mémoire (MP) ayant au plus 2^{N+M} adresses et un moyen de traduction d'adresse (MMU, TLB) pour faire correspondre une adresse physique à N+M bits (@PA) de la mémoire à une adresse à N bits (@VA) délivrée par l'unité centrale (CPU), accolée à un identificateur d'espace à M bits (ASI) élaboré par ladite unité centrale.

4. Objet portable conforme à la revendication 3, selon lequel le moyen de traduction d'adresse (MMU, TLB ou autre) fait correspondre l'identificateur d'espace délivré (ASI) et seulement des bits de poids fort (MSB) de l'adresse délivrée (@VA) à des bits de poids fort de l'adresse physique (@PA), l'adresse délivrée et l'adresse physique ayant des bits de poids faible (LSB) en commun.
